Europäisches Patentamt

European Patent Office

Office européen des brevets

(19)

(11) Numéro de publication : **0 155 661 B1**

(12) **FASCICULE DE BREVET EUROPÉEN**

(45) Date de publication du fascicule du brevet :
02.11.89

(51) Int. Cl.⁴ : **G 04 C 3/14, H 02 P 8/00**

(21) Numéro de dépôt : 85103107.0

(22) Date de dépôt : 18.03.85

(54) **Circuit de commande d'un moteur pas à pas.**

(30) Priorité : 23.03.84 CH 1482/84

(43) Date de publication de la demande :
25.09.85 Bulletin 85/39

(45) Mention de la délivrance du brevet :
02.11.89 Bulletin 89/44

(84) Etats contractants désignés :
DE FR GB

(56) Documents cités :
EP-A- 0 087 583
US-A- 3 560 821
US-A- 4 114 364
US-A- 4 227 127
Le dossier contient des informations techniques
présentées postérieurement au dépôt de la demande
et ne figurant pas dans le présent fascicule.

(73) Titulaire : ASULAB S.A.
Faubourg du Lac 6
CH-2501 Bienne (CH)

(72) Inventeur : Bui, Ngoc Chau

CH-2046 Fontaines (CH)
Inventeur : Gete, Henri
Beau-Site 5
CH-2208 Les Hauts-Geneveys (CH)
Inventeur : Robert-Grandpierre, Jean-Claude
4, chemin des 4 Ministraux
CH-2000 Neuchâtel (CH)

(74) Mandataire : de Montmollin, Henri et ai
ICB Ingénieurs Conseils en Brevets SA Passage
Max. Meuron 6
CH-2001 Neuchâtel (CH)

Jouve, 18, rue St-Denis, 75001 Paris, France

**Description**

La présente invention a pour objet un circuit de commande d'un moteur pas à pas ayant un rotor et une bobine couplée magnétiquement au rotor, comportant des moyens pour produire un signal de commande chaque fois que la bobine doit être alimentée, des moyens comprenant un premier transistor relié à la bobine pour appliquer à la bobine une impulsion d'alimentation en réponse au signal de commande, et des moyens pour fournir un signal de mesure représentatif du courant circulant dans la bobine en réponse à l'impulsion d'alimentation.

De tels circuits sont couramment utilisés dans les dispositifs comportant un moteur pas à pas entraînant des organes mécaniques, directement ou par l'intermédiaire d'un train d'engrenages.

Les moteurs pas à pas sont bien connus et ne seront pas décrits en détail ici, sinon pour rappeler qu'ils comportent une bobine couplée magnétiquement à un rotor par un stator.

Les circuits de commande de ces moteurs pas à pas peuvent être de nombreux types différents. Ils ont cependant toujours pour fonction d'appliquer à la bobine de ces moteurs des impulsions d'alimentation, c'est-à-dire des impulsions pendant lesquelles cette bobine est reliée à la source d'alimentation du circuit.

Ces impulsions d'alimentation peuvent avoir des durées plus ou moins longues. On peut distinguer parmi elles, par exemple, des impulsions motrices, qui sont celles qui sont normalement destinées à faire tourner le rotor, des impulsions de rattrapage, ayant généralement une durée supérieure à celle des impulsions motrices, et des impulsions de contrôle, qui ont généralement une durée insuffisante pour faire tourner le rotor.

Ces impulsions d'alimentation provoquent le passage d'un courant dans la bobine, dont la variation en fonction du temps est bien connue et ne sera pas décrite ici.

Dans la plupart des cas, le circuit de commande du moteur court-circuite la bobine entre les impulsions d'alimentation et, notamment, après chaque impulsion motrice ou de rattrapage. En raison de ce court-circuit, un courant circule également dans la bobine, immédiatement après la fin de ces impulsions. Ce courant est induit dans la bobine par les oscillations que le rotor effectue autour de sa position d'équilibre à la fin de sa rotation. Ce courant est donc également produit, indirectement, par l'impulsion d'alimentation qui a fait tourner le rotor.

Les circuits de commande des moteurs pas à pas comportent fréquemment des moyens pour fournir un signal de mesure représentatif du courant qui circule dans la bobine du moteur en réponse à ces impulsions d'alimentation. Ce signal de mesure peut être utilisé, par exemple, pour ajuster la quantité d'énergie fournie au moteur par son circuit de commande en fonction de la charge mécanique entraînée par le moteur. Cet ajustement permet de diminuer notablement l'énergie consommée par le moteur, ce qui est important lorsque ce moteur fait partie d'un dispositif portable, tel qu'une pièce d'horlogerie électronique, dans lequel la place disponible pour la source d'énergie électrique est très limitée. Le brevet US 4,114,364 décrit un circuit réalisant cet ajustement pour chaque impulsion motrice, à partir de la mesure du courant qui circule dans la bobine en réponse à cette impulsion motrice. Dans ce cas, la mesure du courant doit donc être faite pendant toute la durée de l'impulsion motrice.

Le brevet US 4,212,156 décrit un autre circuit réalisant cet ajustement à partir de la mesure du courant qui circule dans la bobine alors que celle-ci est mise en court-circuit, immédiatement après une impulsion motrice. Dans ce cas, la mesure du courant doit donc être effectuée après la fin de l'impulsion motrice.

La mesure du courant dans la bobine peut également servir à déterminer si le rotor a correctement tourné en réponse à une impulsion motrice. Le brevet US 4,272,837 décrit un circuit de commande du moteur qui applique à la bobine, après chaque impulsion motrice, une impulsion de contrôle de durée suffisamment faible pour que le rotor ne soit pas entraîné. La vitesse de croissance du courant dans la bobine en réponse à cette impulsion de contrôle permet au circuit de commande de déterminer si le rotor a tourné correctement ou non. Dans ce dernier cas, le circuit de commande produit une impulsion supplémentaire, généralement appelée impulsion de rattrapage, telle que le rotor exécute le pas qu'il vient de manquer. Le circuit de commande ajuste également l'énergie fournie au moteur par les impulsions motrices suivantes. Dans ce cas, la mesure du courant ne doit donc être faite que pendant l'impulsion de contrôle.

Cette détermination de la rotation ou de la non-rotation du rotor en réponse à une impulsion motrice peut également être faite en mesurant le courant qui circule dans la bobine en réponse à l'impulsion motrice suivante, à un instant situé entre le début de cette impulsion motrice et le début de la rotation du rotor. Le brevet US. 4,300,223 décrit un circuit réalisant cette détermination de cette manière. Dans ce cas, la mesure du courant ne doit donc être faite qu'à l'instant mentionné ci-dessus.

Les moyens de mesure du courant circulant dans la bobine comportent généralement une résistance branchée en série avec cette bobine. La chute de tension produite par le passage du courant dans cette résistance constitue le signal de mesure de ce courant.

Cette résistance provoque une diminution de la tension utile aux bornes de la bobine du moteur et dissipe une énergie non négligeable. Pour éviter ces inconvénients, sa valeur doit être choisie très faible, mais alors la tension présente à ses bornes est également très faible, ce qui complique son utilisation par le circuit de mesure.

EP 0 155 661 B1

Il a été également proposé d'utiliser la chute de tension aux bornes de l'un des transistors de puissance reliés à la bobine comme mesure du courant circulant dans celle-ci. La suppression de la résistance de mesure constitue effectivement un avantage. Mais la chute de tension aux bornes d'un transistor est faible, ce qui complique également son utilisation par le circuit de commande. De plus, cette chute de tension varie d'un transistor à l'autre à cause des différences inévitables de leurs caraotéristiques, ce qui complique encore plus son utilisation.

La demande de brevet EP-A-0087 583 décrit un circuit de mesure du courant circulant dans une bobine d'un moteur pas à pas qui comporte un circuit miroir de courant branché en série avec cette bobine. Ce circuit miroir de courant comporte un premier transistor dont le trajet collecteur-émetteur est en série avec la bobine et son transistor de commande, et dont le collecteur et la base sont reliés l'un à l'autre. Le circuit miroir de courant comporte un deuxième transistor dont l'émetteur et la base sont respectivement reliés à l'émetteur et à la base du premier transistor. Le courant de collecteur de ce deuxième transistor est proportionnel au courant qui circule dans le premier transistor, et donc au courant circulant dans la bobine.

Le premier transistor du circuit miroir de courant fonctionne comme diode, puisque son collecteur et sa base sont reliés. La chute de tension entre son collecteur et son émetteur est donc de l'ordre de 0,6 V ou plus. Une telle chute de tension n'est pas supportable si la tension de la source qui fournit le courant à la bobine n'est que de 1,5 V, ce qui est le cas dans la majorité des pièces d'horlogerie électroniques.

Les moyens connus ne permettent donc pas de réaliser la mesure du courant circulant dans la bobine du moteur de manière simple et précise.

Le but de la présente invention est de proposer un circuit de commande d'un moteur pas à pas comportant un circuit de mesure du courant circulant dans la bobine qui ne présente pas les inconvénients mentionnés ci-dessus.

Ce but est atteint par le dispositif revendiqué.

L'invention va maintenant être décrite à l'aide du dessin dans lequel :
— la figure 1 représente un schéma d'un circuit de commande selon l'invention ; et
— les figures 2 et 3 sont des diagrammes représentant quelques signaux mesurés dans le circuit de la figure 1.

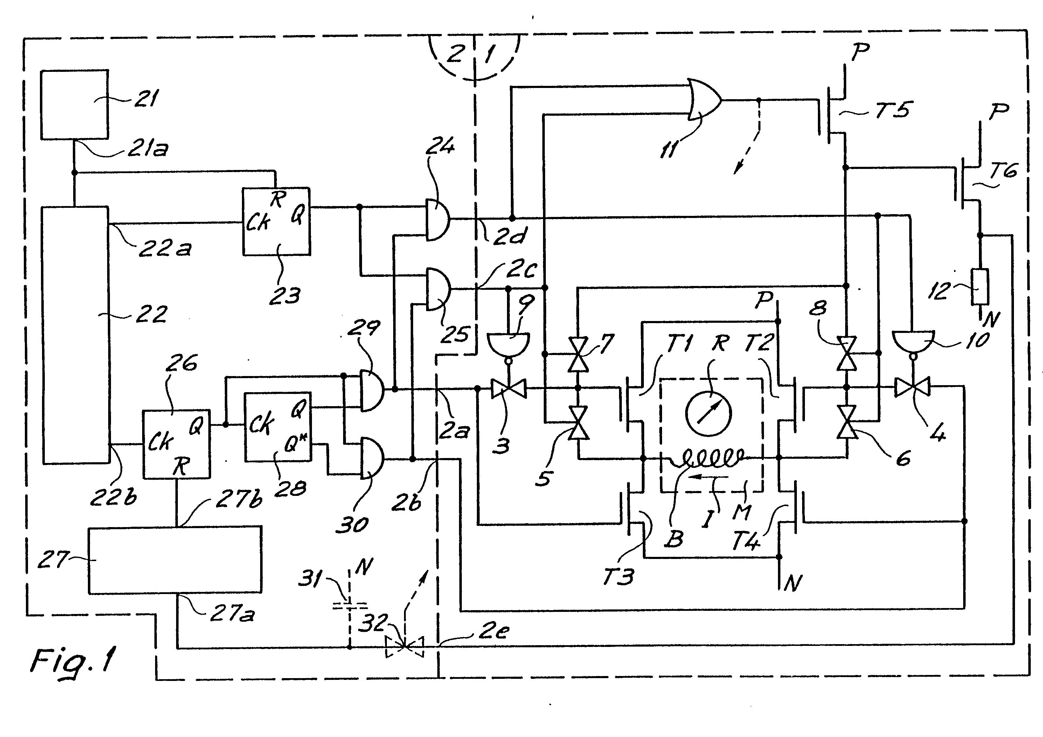

La figure 1 représente, à titre d'exemple non limitatif, le schéma d'une pièce d'horlogerie électronique comportant un moteur pas à pas M, du type couramment utilisé dans les pièces d'horlogerie, qui entraîne des aiguilles d'affichage des heures, des minutes et des secondes, non représentées, par l'intermédiaire d'un train d'engrenages, également non représenté.

Ce moteur M, qui ne sera pas décrit en détail ici, comporte un rotor R comprenant un aimant permanent bipolaire dont l'axe d'aimantation est symbolisé par une flèche, et une bobine B couplée magnétiquement au rotor R par un stator non représenté.

Le rotor R tourne chaque seconde, de manière bien connue, d'un pas de 180° en réponse à une impulsion motrice appliquée à la bobine B par un circuit de commande qui comporte un circuit formateur d'impulsions d'alimentation 1 et un circuit générateur d'impulsions de commande 2.

Le circuit formateur d'impulsions d'alimentation 1 comporte, de manière également bien connue, un pont formé de deux transistors MOS de type p, désignés par T1 et T2, et de deux transistors MOS de type n, désignés par T3 et T4.

Les drains des transistors T1 et T3 sont reliés, ensemble, à une des bornes de la bobine B, et les drains des transistors T2 et T4 sont reliés, ensemble, à l'autre borne de la bobine B.

Les sources des transistors T1 et T2 sont reliées à la borne positive P d'une source d'énergie électrique, non représentée, qui alimente l'ensemble du circuit de la figure 1. Cette source d'énergie électrique est, dans le présent exemple, une pile.

Les sources des transistors T3 et T4 sont reliées à la borne négative N de cette pile.

Les grilles des transistors T3 et T4 sont respectivement reliées aux sorties 2a et 2b du circuit générateur d'impulsions de commande 2 qui sera décrit plus loin.

Les grilles des transistors T1 et T2 sont également reliées à ces sorties 2a, respectivement 2b, mais par l'intermédiaire de deux portes de transmission 3, respectivement 4.

La grille et le drain du transistor T1 sont reliés par une porte de transmission 5, et la grille et le drain du transistor T2 sont reliés par une porte de transmission 6.

En outre, les grilles des transistors T1 et T2 sont toutes deux reliées, par des portes de transmission 7, respectivement 8, au drain d'un transistor MOS de type p, désigné par T5, et à la grille d'un autre transistor MOS, également de type p, désigné par T6.

Les électrodes de commande des portes de transmission 5 et 7 sont reliées, ensemble, à une autre sortie, 2c, du circuit 2. L'électrode de commande de la porte de transmission 3 est reliée à cette sortie 2c par l'intermédiaire d'un inverseur 9.

De même, les électrodes de commande des portes de transmission 6 et 8 sont reliées, ensemble, à une sortie 2d du circuit 2, et l'électrode de commande de la porte de transmission 4 est reliée à cette sortie 2d par un inverseur 10.

La source du transistor T5 est reliée à la borne positive P de la pile et sa grille est reliée à la sortie d'une porte OU 11.

Les deux entrées de cette porte 11 sont reliées aux sorties 2c et, respectivement, 2d du circuit 2.

3

Enfin, la source du transistor T6 est également reliées à la borne positive P de la pile et son drain est relié à une entrée 2e du circuit 2 et, par l'intermédiaire d'une résistance 12, à la borne négative N de la pile.

Le circuit générateur d'impulsions de commande 2, également représenté à la figure 1, comporte, dans le présent exemple, un oscillateur 21 qui délivre à sa sortie 21a un signal périodique ayant une fréquence de 32'768 Hz.

Ce signal est appliqué à l'entrée d'un circuit diviseur de fréquence 22 formé, de manière classique, par une chaîne de flip-flops connectés en série, qui ne sont pas représentés séparément à la figure 1. Ce circuit diviseur 22 comporte, dans le présent exemple, deux sorties 22a et 22b qui délivrent des signaux périodiques ayant respectivement des fréquences de 4'096 Hz et 1 Hz.

Les signaux délivrés par les sorties 21a, 22a et 22b sont, de manière classique, formés par des impulsions logiques carrées, c'est-à-dire qu'ils prennent alternativement les états logiques « 0 » et « 1 » pendant une moitié de leur période, soit pendant environ 15 microsecondes, 122 microsecondes et 500 millisecondes respectivement.

La sortie 22a du diviseur 22 est reliée à l'entrée d'horloge Ck d'un flip-flop 23, de type T, dont l'entrée de remise à zéro R est reliée à la sortie 21a de l'oscillateur 21.

La sortie Q de ce flip-flop 23 est reliée aux premières entrées de deux portes ET 24 et 25, dont les sorties sont respectivement reliées aux sorties 2d et 2c du circuit générateur 2.

La sortie 22b du diviseur 22 est reliée à l'entrée d'horloge Ck d'un flip-flop 26, également de type T, dont l'entrée de remise à zéro R est reliée à la sortie 27b d'un circuit de mesure de la charge mécanique entraînée par le moteur M. Ce circuit 27, dont l'entrée 27a est reliée à l'entrée 2e du générateur 2, est, par exemple, du type qui est décrit par le brevet US 4,114,364. La sortie Q du flip-flop 26 est reliée à l'entrée d'horloge Ck d'un flip-flop 28, également de type T, et aux premières entrées de deux portes ET 29 et 30.

Les sorties directe Q et inverse Q* du flip-flop 28 sont respectivement reliées aux deuxièmes entrées des portes 29 et 30.

Les sorties de ces portes 29 et 30 sont reliées respectivement aux deuxièmes entrées des portes 24 et 25 ainsi qu'aux sorties 2a et 2b du générateur 2.

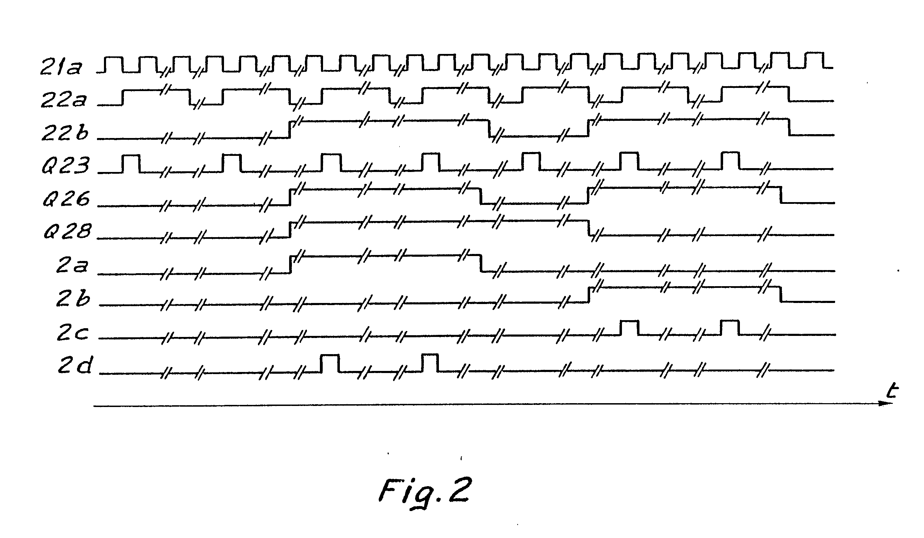

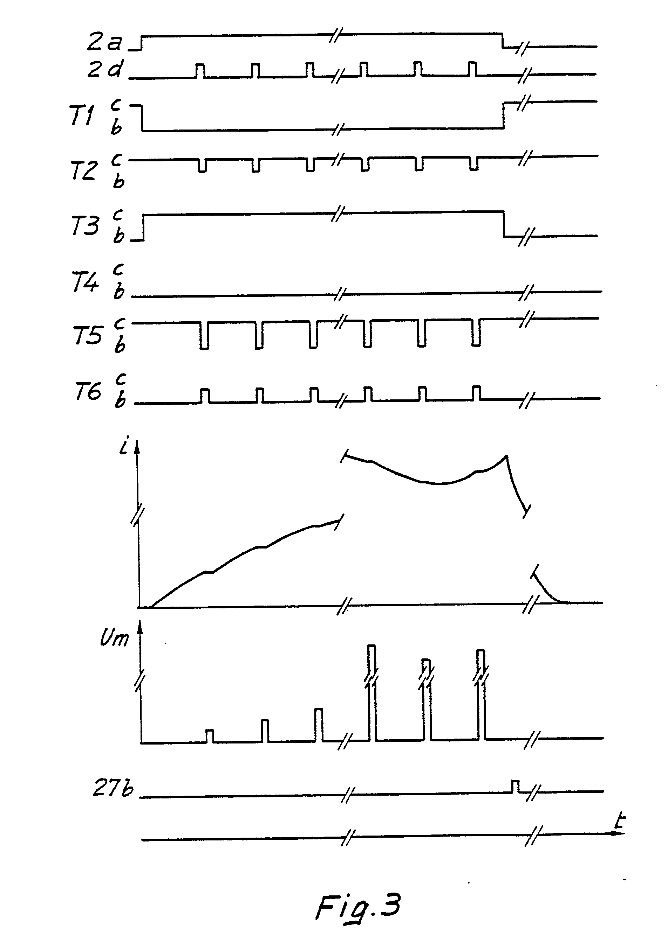

Le fonctionnement des circuits de la figure 1 va maintenant être décrit à l'aide des figures 2 et 3.

Les diagrammes de ces figures 2 et 3 qui sont désignés par la même référence qu'un point du circuit de la figure 1 représentent la variation en fonction du temps du signal logique mesuré en ce point.

Dans la figure 3, les diagrammes désignés par T1 à T6 représentent l'état des transistors portant la même référence. Ces transistors peuvent être bloqués, auquel cas le diagramme qui leur correspond est situé en regard de la référence b, ou être conducteurs, auquel cas ce diagramme est situé en regard de la référence c. En outre, comme cela sera expliqué par la suite, les transistors T1, T2 et T6 peuvent se trouver dans un état intermédiaire entre leur état bloqué et leur état conducteur, auquel cas le diagramme correspondant est situé arbitrairement entre les références b et c.

Dans la figure 3 également, le diagramme désigné par i représente le courant qui circule dans la bobine pendant une impulsion motrice et le diagramme désigné par Um représente le signal de mesure qui sera décrit plus loin.

Il faut noter que les échelles auxquelles les figures 2 et 3 sont dessinées sont arbitraires et différentes l'une de l'autre.

Comme cela est généralement le cas dans les circuits diviseurs, les flip-flops qui forment le diviseur de fréquence 22 sont agencés et reliés les uns aux autres de manière à changer d'état en réponse au passage de l'état logique « 1 » à l'état logique « 0 » de la sortie du flip-flop qui les précède ou, pour le premier d'entre eux, de la sortie 21a de l'oscillateur 21. Il résulte de cette disposition que la sortie d'un flip-flop quelconque, notamment la sortie 22a ou la sortie 22b du diviseur 22, change d'état logique à un instant où les sorties de tous les flip-flops précédents et la sortie 21a de l'oscillateur 21 passent de l'état logique « 1 » à l'état logique « 0 ».

Il faut également noter que les flip-flops 23, 26 et 28 changent d'état en réponse au passage de l'état logique « 0 » à l'état logique « 1 » de leur entrée d'horloge Ck. Pour les flip-flops 23 et 26, ce changement d'état n'est possible que si leur entrée de remise à zéro R est à l'état logique « 0 ». Si cette entrée R est à l'état logique « 1 », leur sortie Q est maintenue à l'état logique « 0 » quel que soit l'état de leur entrée d'horloge Ck.

Il faut encore noter que les portes de transmission 3 à 8 sont agencées de manière à être bloquées lorsque leur électrode de commande est à l'état logique « 0 » et à être conductrices lorsque cette électrode de commande est à l'état logique « 1 ».

Enfin, comme cela est usuel, les états logiques « 0 » et « 1 » sont représentés respectivement, dans le présent exemple, par le potentiel de la borne négative N et de la borne positive P de la source d'alimentation du circuit. Il en résulte qu'un état logique « 0 », respectivement « 1 », appliqué sur la grille des transistors T1, T2, T5 ou T6 rend ces transistors conducteurs, respectivement bloqués. Au contraire, un état logique « 0 », respectivement « 1 », appliqué sur la grille des transistors T3 ou T4 rend ces derniers bloqués, respectivement conducteurs.

Il est facile de voir que la sortie Q du flip-flop 23 délivre en permanence des impulsions ayant une fréquence de 4'096 Hz, comme la sortie 22a du diviseur 22, et une durée de 15 microsecondes environ, durée qui est égale à une demi-période du signal de sortie de l'oscillateur 21.

La sortie Q du flip-flop 26 délivre des impulsions ayant une fréquence de 1 Hz et une durée déterminée par le circuit 27 en fonction de la mesure du courant dans la bobine. Cette détermination sera décrite plus loin.

Il est également facile de voir que les impulsions fournies par la sortie Q du flip-flop 26 sont transmises au circuit formateur 1 par les sorties 2a et 2b alternativement. En outre, pendant chaque impulsion fournie par la sortie 2a ou la sortie 2b, les impulsions fournies par la sortie Q du flip-flop 23 sont transmises au circuit formateur 1 par la sortie 2d ou, respectivement, par la sortie 2c.

Il faut noter que la première impulsion fournie par la sortie 2d ou 2c commence environ 122 microsecondes après le début de l'impulsion fournie par la sortie 2a, respectivement 2b.

Entre les impulsions fournies par la sortie Q du flip-flop 26, les sorties 2a, 2b, 2c et 2d du circuit 2 sont à l'état « 0 ». Les portes de transmission 5 à 8 sont donc bloquées, alors que les portes de transmission 3 et 4 sont conductrices.

Les grilles des transistors T1 à T4 sont donc à l'état « 0 », ce qui rend conducteurs les transistors T1 et T2 et bloque les transistors T3 et T4. Les deux bornes de la bobine B sont donc reliées à la borne positive P de la source d'alimentation, et aucun courant ne circule dans cette bobine B, pour autant que le rotor R soit immobile.

La sortie de la porte 11 est également à l'état « 0 », ce qui rend conducteur le transistor T5. La grille du transistor T6 est donc reliée à la borne positive P de la source d'alimentation, ce qui le bloque. Aucun courant ne circule donc dans la résistance 12, et l'entrée 2e du générateur 2 se trouve au potentiel de la borne négative N de la source d'alimentation.

Chaque fois qu'une impulsion motrice doit être appliquée au moteur M, c'est-à-dire chaque seconde dans le présent exemple, la sortie 22b du diviseur 22 passe à l'état « 1 ». Si, par exemple, la sortie Q du flip-flop 26 était auparavant à l'état « 0 », elle passe alors à l'état « 1 ».

La sortie 2a du générateur 2 passe donc également à l'état « 1 », ce qui provoque le blocage du transistor T1 et la mise en conduction du transistor T3. Comme le transistor T2 reste conducteur, la bobine B est soumise à une tension pratiquement égale à la tension de la source d'alimentation du circuit. Un courant i commence donc à circuler dans la bobine B, dans le sens indiqué par la flèche I à la figure 1.

Le circuit formateur 1 commence donc à appliquer l'impulsion motrice au moteur M en réponse au signal de commande fourni par la sortie 2a du générateur 2.

Environ 122 microsecondes après le début de cette impulsion motrice, la sortie 2d du générateur 2 commence à délivrer les impulsions dont la production a été décrite ci-dessus.

Chacune de ces impulsions, qui seront appelées impulsions C dans la suite de cette description, provoque le blocage de la porte de transmission 4 et la conduction des portes de transmission 6 et 8. En même temps, chaque impulsion C provoque le blocage du transistor T5 par l'intermédiaire de la porte 11.

Pendant la durée de chaque impulsion C, la liaison entre la grille du transistor T2 et la sortie 2b du circuit générateur 2 est donc interrompue. Par contre, la grille et le drain de ce transistor T2 sont reliés l'un à l'autre par la porte de transmission 6 et, par la porte de transmission 8, à la grille du transistor T6.

A la fin de chaque impulsion C, les portes de transmission 6 et 8 se bloquent à nouveau et la porte de transmission 4 redevient conductrice. Le transistor T5 redevient conducteur et le transistor T6 redevient bloqué. Le circuit formateur 6 se retrouve donc dans l'état qu'il avait avant le début de cette impulsion C.

Il a été montré ci-dessus que, pendant chaque impulsion C, la grille et le drain du transistor T2 sont reliés, ensemble, à la grille du transistor T6. Ces deux transistors T2 et T6 forment donc, pendant ces impulsions C, un circuit qui est bien connu sous le nom de miroir de courant, dont le fonctionnement ne sera pas décrit en détail ici.

Dans un tel miroir de courant, la tension grille-source du transistor de sortie, qui est ici le transistor T6, est égale à la tension grille-source du transistor d'entrée, qui est ici le transistor T2. Le courant de drain Is du transistor de sortie est donc proportionnel au courant de drain Ie du transistor d'entrée.

Le facteur de proportionnalité K entre ces deux courants est donné par la relation

$$K = \frac{Is}{Ie} = \frac{Ws}{Ls} \cdot \frac{Le}{We}$$

dans laquelle Ws et Ls sont respectivement la largeur et la longueur du canal du transistor de sortie, et We et Le sont respectivement la largeur et la longueur du canal du transistor d'entrée.

Si les longueurs Ls et Le sont choisies égales, ce qui est généralement le cas en pratique, le facteur K ne dépend plus que du rapport des largeurs Ws et We des canaux des deux transistors.

Les techniques modernes de fabrication des circuits intégrés permettent de réaliser des transistors dont les canaux ont des largeurs qui sont dans des rapports très précis et très reproductibles. Il est donc possible de choisir très librement la valeur du facteur K, et de fabriquer des circuits dans lesquels la valeur choisie est très exactement obtenue.

Dans le cas de la figure 1, le courant i qui circule dans le transistor T2 et dans la bobine B pendant une impulsion C quelconque ne suit bien entendu plus la variation bien connue du courant passant dans la bobine d'un moteur pas à pas en réponse à une impulsion motrice, puisque la grille et le drain de ce transistor T2 sont reliés l'un à l'autre. Ce courant i décroît exponentiellement à partir de la valeur qu'il a au début de cette impulsion C, avec une constante de temps qui dépend, notamment, de la valeur de l'inductivité L de la bobine B et de la résistance interne du transistor T2.

Si cette constante de temps est assez longue par rapport à la durée des impulsions C, ce qui est le cas en pratique, on peut admettre que le courant i reste sensiblement constant pendant chacune de ces impulsions C.

Pendant chaque impulsion C, le transistor T6 délivre donc un courant i' proportionnel au courant i qui circule au début de cette impulsion C dans le transistor T2 et dans la bobine B.

Ce courant i' pourrait être utilisé comme signal de mesure du courant i. Cependant, les circuits destinés à utiliser un signal de mesure du courant circulant dans la bobine ont généralement besoin d'un signal ayant la forme d'une tension proportionnelle à ce courant. C'est la raison pour laquelle, dans l'exemple de la figure 1, une résistance 12 est branchée en série avec le circuit miroir de courant, c'est-à-dire entre le drain du transistor T6 et la borne négative N de la source d'alimentation.

Le passage de ce courant i' dans la résistance 12 produit, au point où cette résistance 12 est reliée au drain du transistor T6, une tension de mesure dont la valeur Um est donc également proportionnelle au courant i circulant dans la bobine B. Le facteur de proportionnalité K' entre la tension Um et le courant i est, bien entendu, donné par

$$K' = K \cdot R12$$

où R12 est la valeur de la résistance 12.

Cette tension Um est appliquée à l'entrée 27a du circuit 27 de mesure de la charge entraînée par le moteur M.

Ce circuit 27 reçoit donc, pendant chaque impulsion C, une impulsion de tension dont l'amplitude est proportionnelle à l'intensité du courant i qui circule dans la bobine B au début de chacune d'elles. Ces impulsions de tension qui se succèdent pendant toute l'impulsion motrice donnent donc une image fidèle du courant qui circule dans la bobine du moteur en réponse à cette impulsion motrice, puisque le facteur K' de proportionnalité entre leur amplitude Um et ce courant i est très exactement déterminé.

Il est bien connu que la variation de ce courant i pendant une impulsion motrice dépend de la charge mécanique entraînée par le moteur. Les circuits tels que le circuit 27 sont agencés pour déterminer, en fonction de la variation d'une tension proportionnelle à ce courant i, l'instant optimal auquel l'impulsion motrice doit être interrompue pour que l'énergie électrique consommée par le moteur soit minimale et que le rotor termine cependant son pas avec sécurité.

Dans le présent exemple, le circuit 27 utilise les impulsions qu'il reçoit sur son entrée 27a pour déterminer l'instant auquel l'impulsion motrice appliquée à la bobine B peut être interrompue. A cet instant, qui ne coïncide pas forcément avec une impulsion C, la sortie 27b de ce circuit 27 passe à l'état « 1 », ce qui remet à zéro la sortie Q du flip-flop 26. La sortie 2a du générateur 2 passe donc également à l'état « 0 », ce qui bloque le transistor T3 et met en conduction le transistor T1. L'impulsion motrice est donc interrompue. En outre, la sortie 2d cesse de délivrer les impulsions C. Le transistor T2 redevient donc conducteur en permanence, comme le transistor T5, alors que le transistor T6 est à nouveau bloqué en permanence. L'entrée 27a du circuit 27 est donc à nouveau au potentiel de la borne négative N de la source d'alimentation. Le circuit de commande du moteur se retrouve donc dans l'état qu'il avait avant le début de l'impulsion motrice, à l'exception du flip-flop 28 dont la sortie Q est maintenant à l'état « 1 ».

Une seconde plus tard, la sortie 22b du diviseur 22 passe à nouveau à l'état « 1 ». La sortie Q* du flip-flop 28 passe donc à l'état « 1 », et la sortie 2b commence à délivrer une nouvelle impulsion de commande. En réponse à cette impulsion, le transistor T2 se bloque et le transistor T4 devient conducteur. Le circuit formateur 1 applique donc à la bobine une nouvelle impulsion motrice, dont la polarité est inverse de la précédente. Un courant commence à circuler dans la bobine B en réponse à cette impulsion motrice, dans le sens inverse du sens de la flèche I.

De manière analogue à ce qui a été décrit ci-dessus, la sortie 2c du générateur 2 commence à délivrer les impulsions fournies par la sortie Q du flip-flop 23 environ 122 microsecondes après le début de cette nouvelle impulsion motrice. Ces impulsions seront appelées impulsions C'.

Pendant chacune de ces impulsions C', le transistor T5 est bloqué et les transistors T1 et T6 forment un circuit miroir de courant qui fonctionne exactement comme cela a été décrit ci-dessus.

L'entrée 27a du circuit 27 de détermination de la charge mécanique entraînée par le moteur reçoit donc également une série d'impulsions dont l'amplitude est proportionnelle au courant circulant dans la bobine B au début de ces impulsions.

La sortie 27b du circuit 27 passe donc également à l'état « 1 » à un instant qui dépend de la charge mécanique entraînée par le moteur.

Le passage de cette sortie 27b à l'état « 1 » provoque bien entendu l'interruption de l'impulsion motrice en cours, comme cela a été décrit ci-dessus.

Le circuit de commande décrit ci-dessus, dans lequel un transistor auxiliaire est relié périodiquement à l'un des transistors qui appliquent les impulsions motrices à la bobine pour former avec ce dernier un circuit miroir de courant, présente plusieurs avantages par rapport aux circuits connus dans lesquels la tension de mesure du courant qui circule dans la bobine est produite à l'aide d'une résistance branchée en série avec cette bobine.

Notamment, un choix judicieux du facteur de proportionnalité K mentionné ci-dessus et de la valeur de la résistance de mesure, qui est la résistance 12 de la figure 1, permet d'obtenir une tension de mesure élevée, qui ne nécessite pas d'amplification avant d'être appliquée au circuit qui l'utilise, tel que le circuit 27 de la figure 1, ce qui n'est pratiquement pas possible dans les circuits connus. En outre, cette tension de mesure élevée est obtenue sans diminution de la tension appliquée à la bobine du moteur pendant les impulsions motrices, contrairement à ce qui se passe dans les circuits connus. Enfin, la puissance dissipée par le circuit de mesure formé par le transistor de sortie du miroir de courant et la résistance de mesure, c'est-à-dire le transistor T6 et la résistance 12 de la figure 1, peut être limitée à une fraction de la puissance dissipée par la résistance de mesure des circuits connus.

La présente invention ne se limite pas au cas décrit à l'aide des figures 1 et 2 où la mesure du courant circulant dans la bobine est faite pendant toute la durée de l'impulsion motrice et où cette mesure est utilisée pour interrompre cette impulsion motrice à l'instant optimal.

Il est en effet évident que cette invention peut être appliquée sans difficulté à tous les cas, dont certains ont été énumérés ci-dessus, où une mesure du courant circulant dans la bobine d'un moteur pas à pas doit être effectuée, quelle que soit l'utilisation de cette mesure.

Il en est de même, évidemment, dans les cas où le moteur comporte plusieurs bobines, dans les cas où son rotor tourne d'un angle différent de 180° en réponse à chaque impulsion motrice, ainsi que dans les cas où le circuit formateur d'impulsions motrices comporte un nombre de transistors reliés à la bobine différent de quatre.

Dans tous ces cas, qui ne seront pas décrits en détail ici, l'utilisation d'un miroir de courant tel que celui qui a été décrit à l'aide de la figure 1 apporte les avantages mentionnés, à savoir l'obtention d'un signal de mesure d'amplitude élevée et très précisément proportionnelle au courant circulant dans la bobine, et la diminution de la puissance consommée par le circuit de mesure.

L'homme du métier n'aura aucune difficulté à adapter les moyens de mesure du courant décrits à l'aide des figures 1 et 2 au circuit particulier qu'il désire utiliser. Cette adaptation consistera essentiellement à prévoir, dans le circuit de commande, des moyens pour produire au moment voulu la ou les impulsions de commande de la mesure semblables aux impulsions C et C′ de l'exemple de la figure 1.

Selon le type de circuit utilisant la mesure du courant, il est possible que celui-ci ne puisse pas utiliser le signal de mesure formé d'une succession d'impulsions qui a été décrit ci-dessus, mais qu'il ait besoin d'un signal évoluant de manière quasi continue.

Un tel signal peut être obtenu, par exemple, en branchant un condensateur entre l'entrée du circuit utilisant la mesure du courant, qui est le circuit 27 dans l'exemple de la figure 1, et la borne négative N de la source d'alimentation. Un tel condensateur a été représenté en pointillé à la figure 1 avec la référence 31.

Pendant chaque impulsion de commande de la mesure, telle que l'une des impulsions C ou C′ de l'exemple des figures 1 et 2, ce condensateur se charge à la tension de mesure, et il maintient cette tension de mesure à l'entrée du circuit utilisateur entre ces impulsions de commande.

Si la valeur de la résistance de mesure, qui est la résistance 12 dans la figure 1, n'est pas suffisante pour que la tension présente à l'entrée du circuit utilisateur reste pratiquement constante entre les impulsions de commande de la mesure telles que C ou C′ malgré la présence du condensateur 31, il est possible d'intercaler une porte de transmission entre ce condensateur 31 et cette résistance de mesure, et de commander cette porte de transmission de manière qu'elle ne conduise que pendant les impulsions de commande de la mesure. Grâce à cette porte de transmission, le condensateur 31 ne peut pas se décharger dans la résistance de mesure entre ces impulsions.

Une telle porte de transmission a été représentée à la figure 1, également en pointillé, avec la référence 32. Dans l'exemple de cette figure 1, son électrode de commande est reliée à la sortie de la porte 11 par une liaison dont seules les extrémités ont été représentées, en pointillé.

La présente invention ne se limite pas non plus au cas où le circuit miroir de courant est formé par la liaison de l'un ou l'autre des transistors T1 ou T2, qui sont de type p, avec un transistor tel que T6, qui est également de type p. Ce circuit miroir de courant pourrait tout aussi bien être formé, avec les mêmes avantages, par la liaison de l'un ou l'autre des transistors T3 ou T4, qui sont du type n, avec un transistor auxiliaire, également de type n.

**Revendications**

1. Circuit de commande d'un moteur pas à pas (M) ayant un rotor (R) et une bobine (B) couplée magnétiquement au rotor (R), comportant des moyens (26, 28 à 30) pour produire un signal de commande chaque fois que la bobine (B) doit être alimentée, des moyens (T1 à T4) comprenant un premier transistor (T1, T2) relié à la bobine (B) pour appliquer à la bobine (B) une impulsion d'alimentation en réponse au signal de commande, et des moyens (3 à 8, 11, 12, T5, T6) pour fournir un signal de mesure représentatif du courant circulant dans la bobine (B) en réponse à l'impulsion d'alimentation, caractérisé par le fait qu'il comporte des moyens (23 à 25) pour produire une impulsion de commande de la mesure, et que les moyens (3 à 8, 11, 12, T5, T6) pour fournir le signal de mesure comportent un deuxième transistor (T6) et des moyens (5 à 8), pour former un miroir de courant avec le premier (T1, T2) et le deuxième transistor

7

(T6) en réponse à l'impulsion de commande de la mesure, le courant fourni par le miroir de courant pendant l'impulsion de commande de la mesure étant représentatif du courant circulant dans la bobine (B) immédiatement avant l'impulsion de commande de la mesure.

2. Circuit de commande selon la revendication 1, caractérisé par le fait que le premier (T1, T2) et le deuxième transistor (T6) sont des transistors MOS, la grille et le drain du premier transistor (T1, T2) étant respectivement reliés aux moyens (26, 28 à 30) pour produire le signal de commande et à la bobine (B), que les moyens pour fournir le signal de mesure (3 à 8, 11, 12, T5, T6) comportent en outre des moyens (3, 4) répondant à l'impulsion de commande de la mesure pour interrompre la liaison entre la grille du premier transistor (T1, T2) et les moyens (26, 28 à 30) pour produire le signal de commande, et que les moyens (5 à 8) pour former un miroir de courant répondent également à l'impulsion de commande de la mesure pour relier la grille du premier transistor (T1, T2) à son drain et à la grille du deuxième transistor (T6).

3. Circuit de commande selon la revendication 2, caractérisé par le fait que les moyens (3 à 8, 11, 12, T5, T6) pour fournir le signal de mesure comportent en outre des moyens (11, T5) pour bloquer le deuxième transistor (T6) en l'absence de l'impulsion de commande de la mesure.

4. Circuit de commande selon la revendication 1, caractérisé par le fait que les moyens (3 à 8, 11, 12, T5, T6) pour fournir le signal de mesure comportent une résistance (12) branchée en série avec le miroir de courant, la chute de tension produite dans cette résistance (12) par le courant circulant dans le miroir de courant pendant l'impulsion de commande de la mesure étant représentative du courant circulant dans la bobine (B) immédiatement avant l'impulsion de commande de la mesure.

**Claims**

1. A control circuit for a stepping motor (M) having a rotor (R) and a coil (B) magnetically coupled to the rotor (R), comprising means (26, 28 to 30) for producing a control signal each time said coil (B) is to be energized, means (T1 to T4) comprising a first transistor (T1, T2) coupled to the coil (B) so as to apply an energization pulse thereto in response to the control signal, and means (3 to 8, 11, 12, T5, T6) for providing a measurement signal representative of the current flowing in the coil (B) in response to the energization pulse, characterized in that it comprises means (23 to 25) for generating a measurement control pulse, and in that said means (3 to 8, 11, 12, T5, T6) for providing a measurement signal comprise a second transistor (T6) and means (5 to 8) for forming a current mirror with the first (T1, T2) and the second transistor (T6), in response to the measurement control pulse, the current supplied by said current mirror during the measurement control pulse being representative of the current flowing in the coil (B) immediately before the measurement control pulse.

2. A control circuit as in claim 1, characterized in that said first (T1, T2) and second transistor (T6) are MOS transistors, the gate and drain of the first transistor (T1, T2) being coupled respectively to the means (26, 28 to 30) for producing the control signal and to the coil (B), in that the measurement signal providing means (3 to 8, 11, 12, T5, T6) further comprise means (3, 4) responding to the measurement control pulse by interrupting the connection between the gate of the first transistor (T1, T2) and the means (26, 28 to 30) for producing a control signal, and in that the means (5 to 8) for forming a current mirror also respond to the measurement control pulse for coupling the gate of the first transistor (T1, T2) to its drain and to the gate of the second transistor (T6).

3. A control circuit as in claim 2, characterized in that the means for providing a measurement signal (3 to 8, 11, 12, T5, T6) additionally comprises means (11, T5) for blocking the second transistor (T6) in the absence of the measurement control pulse.

4. A control circuit as in claim 1, charaoterized in that the means for providing a measurement signal (3 to 8, 11, 12, T5, T6) comprises a resistance (12) connected in series with the current mirror, the voltage drop produced across said resistance (12) by the current flowing in the current mirror during the measurement control pulse being representative of the current flowing in the coil (B) immediately before the measurement control pulse.

**Patentansprüche**

1. Steuerschaltung eines Schrittmotors (M) mit einem Rotor (R) und einer magnetisch mit dem Rotor (R) gekoppelten Spule (B), umfassend Mittel (26, 28 bis 30) zum Erzeugen eines Steuersignals jedesmal, wenn die Spule (B) gespeist werden muß, Mittel (T1 bis T4) mit einem ersten Transistor (T1, T2), verbunden mit der Spule (B), zum Anlegen eines Speiseimpulses and die Spule (B) im Ansprechen auf das Steuersignal, und Mittel (3 bis 8, 11, 12, T5, T6) zum Liefern eines Meßsignals, das repräsentativ ist für den in der Spule (B) im Ansprechen auf den Speiseimpuls fließenden Strom, dadurch gekennzeichnet, daß sie Mittel (23 bis 25) umfaßt zum Erzeugen eines Meßsteuerimpulses, und daß die Mittel (3 bis 8, 11, 12, T5, T6) zum Liefern des Meßsignals einen zweiten Transistor (T6) sowie Mittel (5 bis 8) zum Bilden eines Stromspiegels mit dem ersten (T1, T2) und dem zweiten Transistor (T6) im Ansprechen auf den Messsteuerimpuls umfassen, wobei der von dem Stromspiegel während des Meßsteuerimpulses gelieferte Strom repräsentativ ist für den in der Spule (B) unmittelbar vor dem Meßsteuerimpuls fließenden Strom.

2. Steuerschaltung nach Anspruch 1, dadurch gekennzeichnet, daß der erste (T1, T2) und der zweite Transistor (T6) MOS-Transistoren sind, wobei das Gate bzw. der Drain des ersten Transistors (T1, T2) mit den Mitteln (26, 28 bis 30) zum Erzeugen des Steuersignals bzw. mit der Spule (B) verbunden sind, daß die Mittel (3 bis 8, 11, 12, T5, T6) zum Liefern des Meßsignals ferner auf den Meßsteuerimpuls ansprechende Mittel (3, 4) umfassen zum Unterbrechen der Verbindung zwischen dem Gate des ersten Transistors (T1, T2) und den Mitteln (26, 28 bis 30) zum Erzeugen des Steuersignals, und daß die Mittel zum Bilden eines Stromspiegels gleichermaßen auf den Meßsteuerimpuls ansprechen zum Verbinden des Gate des ersten Transistors (T1, T2) mit seinem Drain und mit dem Gate des zweiten Transistors (T6).

3. Steuerschaltung nach Anspruch 2, dadurch gekennzeichnet, daß die Mittel (3 bis 8, 11, 12, T5, T6) zum Liefern des Meßsignals ferner Mittel (11, T5) umfassen zum Sperren des zweiten Transistors (T6) bei Abwesenheit des Meßsteuersignals.

4. Steuerschaltung nach Anspruch 1, dadurch gekennzeichnet, daß die Mittel (3 bis 8, 11, 12, T5, T6) zum Liefern des Meßsignals einen Widerstand (12) in Serie mit dem Stromspiegel umfassen, wobei der über diesem Widerstand (12) durch den im Stromspiegel während des Meßsteuerimpulses fließenden Strom erzeugte Spannungsabfall repräsentativ ist für den in der Spule (B) fließenden Strom unmittelbar vor dem Meßsteuerimpuls.

Fig.1

EP 0 155 661 B1

Fig.2

Fig.3